# EUROPÄISCHE PATENTANMELDUNG

(11) **EP 2 554 976 A1**
(43) Veröffentlichungstag der Anmeldung: **06.02.2013**
(21) Anmeldenummer: 11176352.0
(22) Anmeldetag: 02.08.2011
(51) Int. Cl.: G01N 21/78

(54) **Elektrooptischer Gassensor auf Basis von Optoden mit oberflächenvergrössernden Strukturen**

(71) Anmelder: SIEMENS AKTIENGESELLSCHAFT, 80333 München (DE)
(72) Erfinder: Hoefer, Ulrich, 6300 Zug (CH)

(57) **Zusammenfassung**

Die Erfindung betrifft einen optoelektrischen Gassensor (1) nach dem Durchlichtprinzip auf der Basis von Optoden. Der Gassensor (1) weist zumindest eine Lichtquelle (2), einen optoelektrischen Empfänger (3) und einen transparenten Träger (5) für Optodenmaterial (7) auf, wobei der Träger (5) dergestalt ist sowie derart zur Lichtquelle (2) und zum optoelektrischen Empfänger (3) angeordnet ist, dass zumindest ein Teil des Lichts in den Träger (5) einkoppelbar, nach Verlauf entlang eines optischen Pfades (L1) wieder auskoppelbar und anschliessend durch den optoelektrischen Empfänger (3) zur Ausgabe eines mit einer vorliegenden Gaskonzentration korrelierenden elektrischen Messsignals (DET) detektierbar ist. Erfindungsgemäss weist der Träger (5) quer zum optischen Pfad (L1) verlaufende, oberflächenvergrössernde Strukturen (6) mit dem Optodenmaterial (7) auf.

## Beschreibung

Die Erfindung betrifft einen optoelektrischen Gassensor nach dem Durchlichtprinzip auf der Basis von Optoden, welcher zumindest eine Lichtquelle, einen optoelektrischen Empfänger und einen transparenten Träger für Optodenmaterial aufweist. Der Träger ist dergestalt und weiterhin derart zur Lichtquelle und zum optoelektrischen Empfänger angeordnet, dass zumindest ein Teil des Lichts in den Träger einkoppelbar, nach Verlauf entlang eines optischen Pfades wieder auskoppelbar und anschliessend durch den optoelektrischen Empfänger zur Ausgabe eines mit einer vorliegenden Gaskonzentration korrelierenden elektrischen Messsignals detektierbar ist.

Die Erfindung betrifft weiterhin geeignete Verwendungen eines derartigen optoelektrischen Gassensors sowie geeignete Vorrichtungen mit einem derartigen optoelektrischen Gassensor.

Derartige Gassensoren auf der Basis des Farbumschlagprinzips sind z.B. aus der europäischen Patentanmeldung EP 1 044 363 A1, aus dem deutschen Patent DE 197 41 335 C1 sowie aus den deutschen Offenlegungsschriften DE 198 28 343 A1 und DE 198 14 575 A1 bekannt.

Nachteilig bei diesen Vorrichtungen ist die langsame Reaktionszeit auf wechselnde Änderungen der Gaskonzentration sowie die vergleichsweise schlechte Messsignalqualität, mit anderen Worten der Messqualität.

Unter einer Optode bzw. unter Optodenmaterial wird insbesondere eine gassensitive (Festkörper-)Schicht verstanden, die aufgrund der in ihr eingelagerter Indikatorsubstanz bzw. Indikatorsubstanzen eine Abhängigkeit der Lichttransmission von der Konzentration eines bestimmten Gases in der die Optode bzw. in der das Optodenmaterial umgebenden Atmosphäre zeig. Dabei reagieren die verwendeten Indikatorsubstanzen selektiv und reversibel auf die Konzentration eines bestimmten zu detektierenden Gases. Die Wechselwirkung in der Indikatorsubstanz führt typischerweise zu einem ausgeprägten lokalen Maximum der Lichtabsorption in einem bestimmten Wellenlängenbereich.

Ausgehend von dem eingangs genannten Stand der Technik ist es eine Aufgabe der Erfindung, einen verbesserten optoelektrischen Gassensor anzugeben.

Es ist eine weitere Aufgabe der Erfindung, geeignete Verwendungen eines derartigen Gassensors sowie einen Brandmelder, Raumklimasensor und einen Gefahrenmelder anzugeben, welcher jeweils einen derartigen optoelektrischen Gassensor aufweist.

Die Aufgabe der Erfindung wird durch die Gegenstände der unabhängigen Ansprüche gelöst. Vorteilhafte Ausführungsformen der vorliegenden Erfindung sind in den abhängigen Ansprüchen angegeben.

Erfindungsgemäss weist der Träger quer zum optischen Pfad, insbesondere senkrecht zum optischen Pfad verlaufende, oberflächenvergrössernde Strukturen mit dem Optodenmaterial auf.

Dadurch ist vorteilhaft eine wesentlich schnellere Gaskonzentrationserfassung mit zugleich deutlich höherer Genauigkeit möglich. Erreicht wird dies durch die im Vergleich des Volumens des transparenten Trägers enorme aktive Oberfläche, welche zum einen mit Optodenmaterial versehen ist und welche zum anderen direkt an Umgebungsluft bzw. an der umgebenden Atmosphäre mit dem zu detektierenden Gas liegt. Durch die wirkaktive Oberfläche beträgt die Sättigungszeit, bis zu welcher der zu einer vorgegebenen Gaskonzentration entsprechende Absorptionsgrad des jeweiligen Optodenmaterials erreicht wird, nur ein Bruchteil im Vergleich zu den bisherigen Gassensoren.

Das Optodenmaterial weist ein oder mehrere Indikatorsubstanzen auf, welche sensitiv zur Detektion eines gewünschten Gas- oder Gasgemisches sind. Die Wechselwirkung der jeweiligen im Optodenmaterial vorhandenen Indikatorsubstanz führt typischerweise zu einem jeweiligen lokalen Maximum der Lichtabsorption, insbesondere im Wellenlängenbereich von 400nm bis 800 nm. Die jeweilige Lage des Absorptionsmaximums liegt typischerweise für jedes zu detektierende Gas und/oder Gasgemisch bei unterschiedlichen Absorptionswellenlängenbereichen.

Als Indikatorsubstanz kommen im Prinzip alle chemischen Verbindungen in Frage, die eine Abhängigkeit der Lichttransmission von der Konzentration eines bestimmten Gases, wie z.B. von NO₂, CO, CO₂, NH₃, in der die Indikatorsubstanz bzw. im Optodenmaterial mit der Indikatorsubstanz in der umgebenden Atmosphäre zeigen. Diese Indikatorsubstanzen reagieren dabei selektiv und reversibel auf die Konzentration eines bestimmten Gases.

Die Indikatorsubstanz kann z.B. ein auf NO₂ (Stickstoffdioxid) sensitiver ZnTPP-Farbkomplex (für Zinktetraphenylporphyrin) sein, dessen Lichtabsorptionsmaximum bei ca. 450 nm liegt.

Die Indikatorsubstanz kann z.B. ein auf Sauerstoff sensitiver Metall-Liganden-Komplex sein, bei dem sich als Metallion Ru(II), Ir(II), Pt(II) und Pd(II) bewährt hat. Als Liganden haben sich z.B. verschiedene Dipyridine, Phenantroline und fluorierte Porphyrine bewährt.

Nach einer bevorzugten Ausführungsform weist der transparente Träger eine Vielzahl von Lamellen als oberflächenvergrössernde Strukturen auf. Gerade durch diese kammartige Struktur ist das Verhältnis von Volumen des Trägers zur Oberfläche der Lamellen besonders gross.

Einer weiteren Ausführungsform zufolge ist der transparente Träger mit den oberflächenvergrössernde Strukturen aus einem Kunststoff oder aus einem Glas hergestellt. Insbesondere ist der Träger mittels eines Spritzgussverfahrens hergestellt. Dadurch ist eine kostengünstige Herstellung des erfindungsgemässen Gassensors in hohen Stückzahlen möglich. Der Kunststoff kann z.B. Polystyrol oder Polypropylen aufweisen. Der transparente Träger kann alternativ z.B. Quarzglas oder Kalziumfluorid oder Mineralglas als Glas aufweisen. Entscheidend ist hierbei, dass der jeweilige Kunststoff oder das jeweilige Glas zumindest transparent im Absorptionswellenlängenbereich der jeweiligen für ein Gas- oder Gasgemisch sensitiven Indikatorsubstanz im Optodenmaterial ist.

Insbesondere ist das Optodenmaterial mittels eines Beschichtungs- oder Tauchverfahrens auf die oberflächenvergrössernden Strukturen aufgebracht. Das Optodenmaterial ist z.B. eine flüssige, nach Trocknung an Luft aushärtende Polymermatrix mit zumindest einer eingelagerten, für ein zu detektierendes Gas- oder Gasgemisch sensitiven Indikatorsubstanz. Die Polymermatrix kann z.B. ein Polyester, ein polymeres Harz, PVC (für Polyvenylchlorid) oder PMMA (für Polymethylmethacrylat) aufweisen. Der Polymatrix kann gegebenenfalls auch ein Härter in geringen Volumenanteilen beigemischt sein.

Alternativ oder zusätzlich kann der transparente Träger aus einem Kunststoff als Matrix mit eingebettetem Optodenmaterial hergestellt sein. Dadurch kann vorteilhaft auf den Aufbringungsschritt des Optodenmaterials auf den transparenten Träger verzichtet werden. Der Kunststoff kann z.B. ein Thermoplast aus Polymeren sein, dem die jeweilige Indikatorsubstanz beigemengt wird und welche nach Abkühlung den festen Aggregatzustand einnimmt.

Einer weiteren Ausführungsform zufolge weist das Optodenmaterial eine oder mehrere, jeweils für ein Gas- oder Gasgemisch sensitive Indikatorsubstanzen mit voneinander verschiedenen Absorptionswellenlängenbereichen auf. Durch die Verwendung mehrerer Indikatorsubstanzen ist vorteilhaft eine Detektion mehrerer Gas- oder Gasgemische unabhängig voneinander möglich. Unter anderem können dadurch auch Querempfindlichkeiten zu anderen Gasen zumindest deutlich reduziert werden.

Insbesondere ist die Lichtquelle dazu eingerichtet, Licht zumindest in den Absorptionswellenlängenbereichen der jeweiligen Indikatorsubstanzen auszusenden. Vorzugsweise ist die Lichtquelle dazu geeignet, Licht in einem Wellenlängenbereich von 400 nm bis 800 nm auszusenden. Die Lichtquelle kann auch mehrere monochrome Lichtquelleneinheiten aufweisen, welche auf die jeweiligen Absorptionswellenlängenbereiche der Indikatorsubstanzen abgestimmt sind. Im einfachsten Fall sendet die Lichtquelle weisses Licht mit kontinuierlichem Spektrum, zumindest im Bereich von 400 nm bis 800 nm aus. Gegebenenfalls können der Lichtquelle ein oder mehrere, auf die jeweiligen Absorptionswellenlängenbereiche der Indikatorsubstanzen abgestimmte Farbfilter nachgeschaltet sein.

Nach einer bevorzugten Ausführungsform ist die Lichtquelle eine Leuchtdiode oder auch eine Laserdiode. Idealerweise sendet die Leuchtdiode bzw. die Laserdiode Licht einer im Wesentlichen monochromatischen Wellenlänge aus, die auf das Absorptionsmaximum des verwendeten Optodenmaterials abgestimmt ist. Die Leuchtdiode bzw. die Laserdiode kann mehrere Leuchtdioden- oder Laserdiodeneinheiten insbesondere als Baueinheit aufweisen, deren jeweiliges monochromatisches emittiertes Licht auf das Absorptionsmaximum der jeweiligen verwendeten Indikatorsubstanz abgestimmt ist.

Insbesondere ist der optoelektrische Empfänger sensitiv zumindest für Licht in den Absorptionswellenlängenbereichen der jeweiligen Indikatorsubstanzen. Er kann z.B. eine oder mehrere Bereiche aufweisen, der jeweils in einem Absorptionswellenlängenbereich sensitiv ist. Der optische Empfänger kann daher ein oder mehrere elektrische Messsignale bereitstellen, welches jeweils mit einem Gaskonzentrationswert des jeweiligen zu detektierenden Gases oder Gasgemischs korreliert. Die Signale können dann zeitlich parallel oder nacheinander ausgewertet werden.

Der optoelektrische Empfänger kann eine (einheitliche) optische Empfindlichkeit für Licht in einem Wellenlängenbereich von 400 nm bis 800 nm aufweisen. In diesem Fall können mehrere Lichtquelleneinheiten einer Lichtquelle, die Licht mit jeweils unterschiedlicher Wellenlänge aussenden, nacheinander zum Aussenden von Licht angesteuert werden. Das vom optoelektrischen Empfänger detektierte Licht kann dann synchron mit der jeweils ausgesendeten Lichtwellenlänge ausgewertet werden.

Einer bevorzugten Ausführungsform nach ist der optoelektrische Empfänger ein Photosensor. Dieser kann z.B. eine Halbleiter-Photodiode oder ein Halbleiter-Phototransistor sein. Er kann alternativ auch eine Photoröhre sein.

Nach einer weiteren bevorzugten Ausführungsform weist der optoelektrische Gassensor einen für Licht empfindlichen weiteren optoelektrischen Empfänger auf, welcher der Lichtquelle gegenüberliegend und ausserhalb des optischen Pfades angeordnet ist. Er weist zudem eine Auswerteeinheit auf, welche zur Erfassung des elektrischen Messsignals vom optoelektrischen Empfänger sowie eines weiteren elektrischen Messsignals vom weiteren optoelektrischen Empfänger vorgesehen ist. Die Auswerteeinheit ist dazu eingerichtet, auf Basis des weiteren elektrischen Messsignals ein helligkeitskompensiertes elektrisches Messsignal auszugeben.

Dadurch kann vorteilhaft das elektrische Messsignal korrigiert werden, falls sich die Lichtausbeute der Lichtquelle aufgrund von Alterung oder Verschmutzung verringert und dadurch auch das elektrische Messsignal kleinere Messwerte aufweist. Das zweite elektrische Messsignal dient hierbei als Referenzquelle. Auf Basis einer vergleichenden Auswertung der beiden elektrischen Signale ist dann eine Helligkeitskompensation des elektrischen Messsignals möglich, welches letztendlich mit dem vorliegenden Gaskonzentrationswert korreliert.

Die Aufgabe der Erfindung wird weiterhin gelöst durch einen Brandmelder, der zur Erfassung zumindest einer Brandkenngrösse eingerichtet ist. Dabei ist im Brandmelder ein erfindungsgemässer optoelektrischer Gassensor integriert. Derartige Brandmelder sind allgemein bekannt. Eine Brandkenngrösse ist z.B. das Vorhandensein eines Mindestkonzentrationswertes von Rauchteilchen im Bereich von 0.1 bis 10 um. Eine Brandkenngrösse kann auch das Vorhandensein eines Mindestkonzentrationswertes von Brandgasen sein, wie z.B. von CO, CO₂, oder von Stickstoff- oder Schwefeloxiden (NOₓ bzw. SO_{X}). Eine weitere Brandkenngrösse kann das Überschreiten eines Umgebungstemperaturwertes sein. Ein derartiger Brandmelder kann z.B. eine optische Messkammer, eine optoakustische Messkammer oder einen Temperaturfühler aufweisen.

Der erfindungsgemässe optoelektrischer Gassensor kann alternativ oder zusätzlich in einem Raumklimasensor integriert sein, der zur Erfassung einer Raumtemperatur, einer Raumluftfeuchte, einer CO₂-Gaskonzentration und/oder zur Erfassung von flüchtigen organischen Verbindungen, das heisst von sogenannten VOC (für volatile organic compounds), eingerichtet ist. Ein derartiger Gassensor kann z.B. einen FET- oder MOSFET-Halbleitertransistor aufweisen, dessen Gate eine gassensitive Beschichtung aufweist.

Weiterhin kann der optoelektrische Gassensor in einem Gefahrenmelder integriert sein, der zur Erfassung lebensgefährlicher Gaskonzentrationswerte in der Umgebungsluft eingerichtet ist. Der Gefahrenmelder ist insbesondere ein CO-Gefahrenmelder zur Erfassung von Kohlenmonoxid.

Den drei zuvor beschriebenen Vorrichtungen kann eine gemeinsame elektronische Auswerteeinheit zugeordnet sein, welche sowohl die Messwerte für die Brandkenngrössen, für die Feuchte, für die Raumtemperatur und Gaskonzentrationswerte, als auch das elektrische Messsignal des erfindungsgemässen optoelektrischen Gassensors erfasst und auswertet. Die Auswerteeinheit ist vorzugsweise ein Mikrocontroller, der dann die ausgewerteten Messwerte akustisch, optisch und/oder leitungsgebunden oder drahtlos an eine übergeordnete Zentrale, wie z.B. Brandmeldezentrale, ausgibt.

Schliesslich kann der erfindungsgemässe optoelektrische Gassensor in einem Brandmelder, in einem Raumklimasensor oder in einem Gefahrenmelder, wie zuvor beschrieben, verwendet werden.

Die Erfindung sowie vorteilhafte Ausführungen der vorliegenden Erfindung werden am Beispiel der nachfolgenden Figuren erläutert. Dabei zeigen:
- FIG 1: ein Beispiel für einen erfindungsgemässen optoelektrischen Gassensor,
- FIG 2: eine erste Ausführungsform des erfindungsgemässen optoelektrischen Gassensors mit zwei Empfängern,
- FIG 3: eine zur vorherigen Ausführungsform alternative Ausführungsform wiederum mit zwei Empfängern,
- FIG 4: eine dritte Ausführungsform mit einem transparenten Träger mit eingebettetem Optodenmaterial,
- FIG 5: eine vierte Ausführungsform mit einer sich ausserhalb des Trägers befindlichen Spiegelanordnung,
- FIG 6: eine fünfte Ausführungsform mit einer im Träger ausgebildeten Spiegelanordnung,
- FIG 7: eine sechste Ausführungsform mit beispielhafte vier prismenartigen oberflächenvergrössernden Strukturen, und
- FIG 8: ein Beispiel für einen Brandmelder zur Erfassung einer Brandkenngrösse mit integriertem erfindungsgemässem optoelektrischen Gassensor.

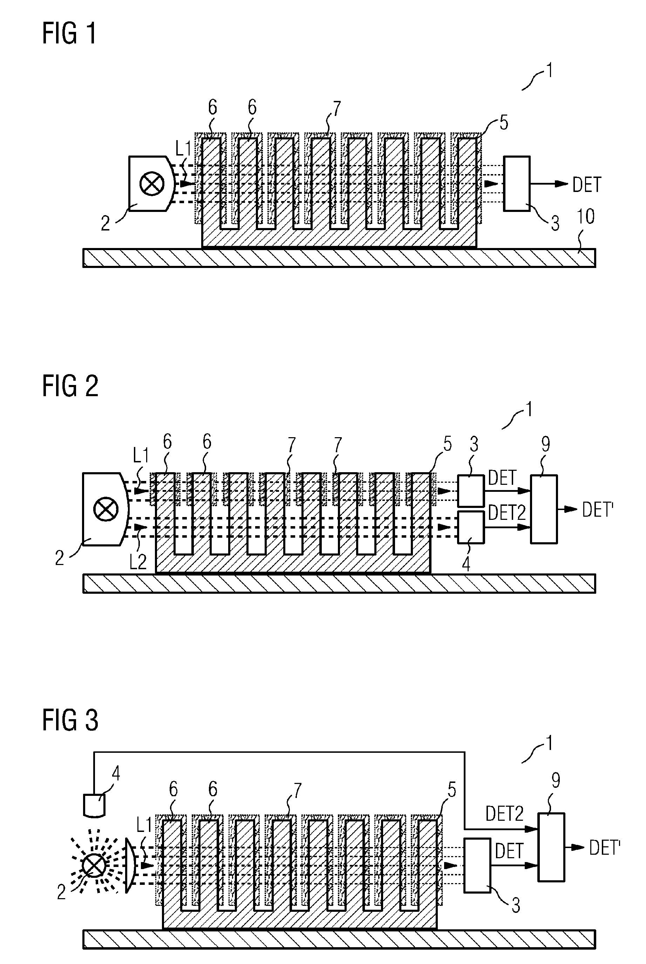

FIG 1 zeigt ein Beispiel für einen erfindungsgemässen optoelektrischen Gassensor 1. Im linken Teil der FIG 1 ist eine Lichtquelle 2 zu sehen, welches gebündeltes Licht aussendet. Die Lichtquelle 2 ist im Beispiel der Figur eine LED. Das ausgesendete Licht koppelt entlang eines optischen Pfads L1 in einen transparenten Träger 5 ein. Dessen der Lichtquelle 2 zugewandten Seite ist vorzugsweise plan und direkt der Lichtquelle 2 gegenüberliegend angeordnet, so dass das von der Lichtquelle 2 ausgesendete Licht entlang der konstruktiven Hauptachse des gezeigten Trägers 5, einkoppelt. Der grösste Teil des Lichts koppelt daher ohne grössere Reflexion an der Stirnseite in den Träger 5, das heisst in Normalenrichtung zur Stirnseite ein. Die Hauptachse des transparenten Trägers 5 verläuft dabei im Wesentlichen parallel zum sich optisch/konstruktiv ergebenden optischen Pfad L1 im Träger 5. Der weitere Verlauf des eingekoppelten Lichts verläuft ohne weitere Totalreflexion an Grenzflächen des Trägers 5 zur angrenzenden Atmosphäre weiter zur auskoppelnden Stirnseite.

Der transparente Träger 5 ist vorzugsweise aus Kunststoff gefertigt. Er weist - in Richtung des optischen Pfades L1 bzw. der Hauptachse des Trägers 5 gesehen - eine Vielzahl von Lamellen 6 als oberflächenvergrössernden Strukturen auf, die quer und im vorliegenden Beispiel senkrecht zum optischen Pfad L1 verlaufen. Insbesondere weisen die Lamellen 6 plane Oberflächen auf, deren jeweilige Flächennormalen parallel zum optischen Pfad L1 verlaufen. Die Lamellen 6 sind dabei mit Optodenmaterial 7 überzogen, wobei noch ein genügend grosser Luftspalt zwischen sich gegenüberliegenden Oberflächen mit dem Optodenmaterial 7 zur optimal möglichen Reaktion mit der angrenzenden Atmosphäre besteht. Vorzugsweise liegt der Luftspalt im Bereich von 0.5 mm bis 5 mm. Die Dicke einer Lamelle in Richtung der Hauptachse liegt vorzugsweise im Bereich von 1 mm bis 3 mm. Die Dicke des Optodenmaterials liegt im Bereich von 0.1 bis 0.5 mm. Die Anzahl der Lamellen liegt insbesondere im Bereich von 2 bis 100, vorzugsweise im Bereich von 8 bis 25. Für besondere Anforderungen können die zuvor genannten Werte auch darüber oder darunter liegen.

Durch die optische Hintereinanderschaltung durchläuft das Licht auf dem Wege von der Einkopplung bis zur Auskopplung auf der rechten Seite der FIG 1 viele Male das gassensitive Optodenmaterial 7. Dadurch wird das eingekoppelte Licht viele Male in seiner Helligkeit geringfügig reduziert bzw. gedämpft. Entsprechend der vorliegenden Gaskonzentration weist das ausgekoppelte und von einem gegenüberliegenden optoelektrischen Empfänger 3 detektierte verleibende Restlicht einen grossen Dynamikbereich mit einer hohen Messsignalqualität auf. Dadurch dass auch sämtliche Lamellen 6 direkt grossflächig in Verbindung mit der Atmosphäre stehen und mit einer entsprechend schnellen optischen Dämpfung auf Änderungen in der Gaskonzentration reagieren können, weist das elektrische Messsignal DET im Vergleich zum Stand der Technik auch sehr schnelle Reaktionszeiten auf.

Im Beispiel der vorliegenden FIG 1 ist der Empfänger 3 eine Photodiode. Der gezeigte Träger 5 kann einen beliebigen Querschnitt aufweisen, wie z.B. quadratisch oder rechteckig. Vorzugsweise ist die Stirnseite auf der Auskoppelseite gleichfalls plan ausgebildet. Insbesondere ist die Flächennormale dieser Stirnseite so zum optischen Pfad L1 bzw. zur Hauptachse ausgerichtet, dass keine Totalreflexion des im Träger 5 verlaufenden Lichts an der Grenzschicht Träger/Atmosphäre eintritt. Mit dem Bezugszeichen 10 ist ferner ein Schaltungsträger, wie z.B. eine Leiterplatte für die Komponenten des Gassensors 1 bezeichnet.

FIG 2 zeigt eine erste Ausführungsform des erfindungsgemässen optoelektrischen Gassensors 1 mit zwei Empfängern 3, 4. In diesem Fall verläuft ein weiteres von der Lichtquelle 2 ausgesendetes Lichtbündel parallel zum optischen Pfad L1 auf einem weiteren optischen Pfad L2 durch den Träger 5, ohne Bereiche mit Optodenmaterial 7 zu durchlaufen. Dieses "zweite" Licht verläuft daher im Wesentlichen ungedämpft durch den Träger 5. Auf der Auskoppelseite wird das durch das Optodenmaterial 7 gedämpfte und das ungedämpfte Licht durch jeweils einen optoelektrischen Empfänger 3, 4 detektiert und das jeweilige Messsignal DET, DET2 einer Auswerteeinheit 9 zugeführt. Die Auswerteeinheit 9 kann diskret aus analogen Bauelementen realisiert sein. Sie kann alternativ oder zusätzlich auch ein Mikrocontroller sein, der dazu eingerichtet ist, auf Basis des weiteren Messsignals DET2 das Messsignal DET helligkeitskompensiert zu ändern. Am Ausgang der Auswerteeinheit 9 steht somit das helligkeitskompensierte Messsignal DET' zur Weiterverarbeitung an. Mit anderen Worten: Nimmt das Helligkeitssignal DET2 ab, so wird das Messsignal DET entsprechend kompensierend mehr verstärkt.

FIG 3 zeigt eine zur vorherigen Ausführungsform alternative Ausführungsform wiederum mit zwei Empfängern 3, 4. Im Vergleich zur vorherigen FIG 2 wird hier ein Teil des Lichts von der Lichtquelle 2 auf direktem Wege durch den weiteren Empfänger 4 detektiert.

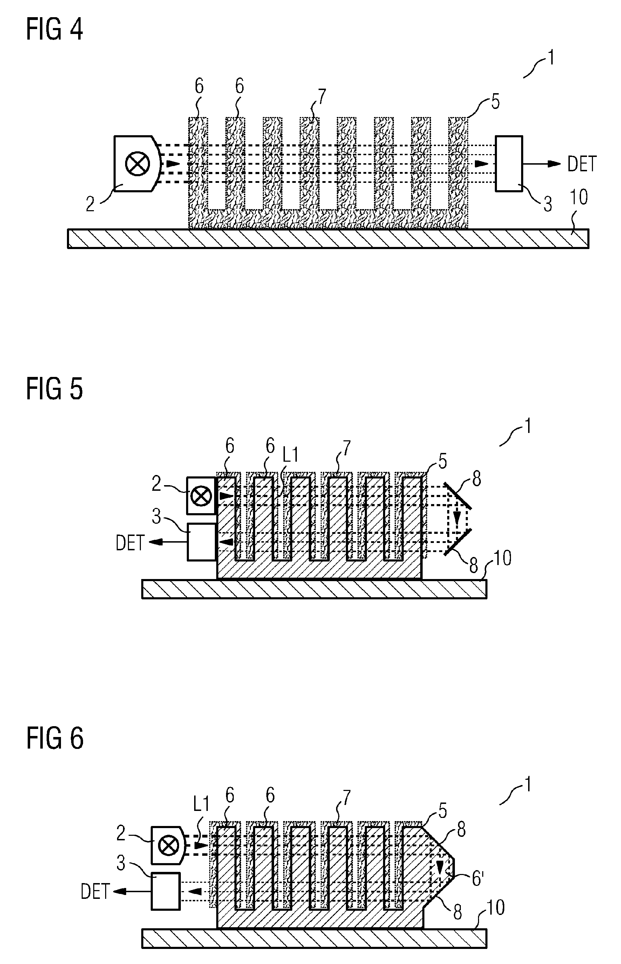

FIG 4 zeigt eine dritte Ausführungsform mit einem transparenten Träger 5 mit eingebettetem Optodenmaterial 7. In diesem Beispiel ist eine nachträgliche Aufbringung des Optodenmaterials 7 auf die oberflächenvergrössernden Strukturen 6 nicht erforderlich.

FIG 5 zeigt eine vierte Ausführungsform mit einer sich ausserhalb des Trägers 5 befindlichen Spiegelanordnung 8. Letztere weist zwei Spiegel auf, welche das eingekoppelte Licht nach erster Auskopplung auf der rechten Seite antiparallel und versetzt zum ersten Lichtpfad zum nochmaligen Durchlaufen der Lamellen 6 wieder in den Träger 5 einkoppeln. Die zweite und letzte Auskopplung zur Detektion erfolgt im vorliegenden Beispiel im linken Teil der FIG 5. Dadurch wird die Empfindlichkeit des Messsignals DET nochmals gesteigert.

Wie die FIG 5 weiterhin auch allgemein zeigt, können sowohl die Lichtquelle 2, insbesondere eine LED oder eine Laserdiode, wie auch der oder die optoelektrischen Empfänger 3, 4 direkt an der jeweiligen Stirnseite angebracht sein, wie z.B. aufgeklebt oder mittels Federkraft angepresst.

FIG 6 zeigt eine fünfte Ausführungsform mit einer im Träger 5 ausgebildeten Spiegelanordnung 8.

Im Vergleich zur vorherigen FIG 5 ist die Spiegelanordnung 8 durch die geometrische Ausgestaltung des Trägers 5 selbst ausgebildet. Dies erfolgt im Beispiel der Figur 5 dadurch, dass die letzte Lamelle 6 als Umlenkprisma 6' ausgebildet ist, deren beiden "chrägflächen" derart zur Hauptachse ausgerichtet sind, dass das durch den Träger 5 verlaufende eingekoppelte Licht an der ersten Schrägfläche im Sinne eines Spiegels 8 unter Totalreflexion zur darunter liegenden zweiten Schrägfläche umgelenkt wird. Letztere lenkt das umgelenkte Licht unter nochmaliger Totalreflexion sowohl versetzt als auch antiparallel zum ersten Lichtpfad zurück zum optoelektrischen Empfänger 3 im linken Teil der FIG 6.

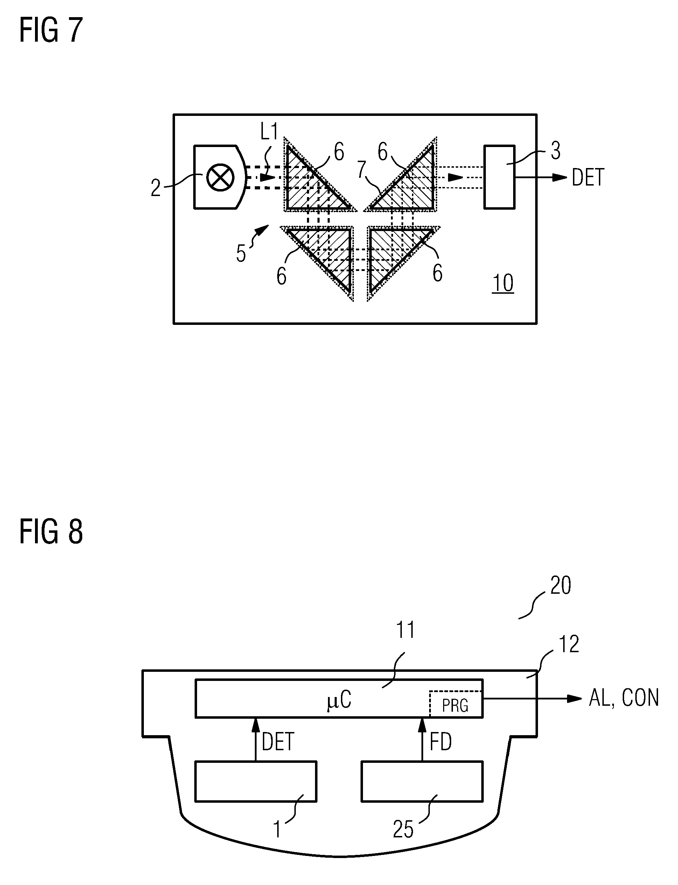

FIG 7 zeigt eine sechste Ausführungsform mit beispielhaft vier prismenartigen oberflächenvergrössernden Strukturen 6. In diesem Fall wird das von der Lichtquelle 2 ausgesendete Licht jeweils einmal in das jeweiligen dreieckige Prisma ein- und ausgekoppelt. Der Lichtstrahl wird dabei jedes Mal unter einem Winkel von 90° umgelenkt.

Wie das vorliegende Beispiel zeigt, ist im Prinzip ein beliebiger Verlauf der Lichtstrahls entlang des sich dann einstellenden optischen Pfades L1 möglich.

FIG 8 zeigt schliesslich ein Beispiel für einen Brandmelder 20 zur Erfassung einer Brandkenngrösse mit integriertem erfindungsgemässem optoelektrischen Gassensor 1. Mit dem Bezugszeichen 12 ist ein Gehäuse des Brandmelders 20 bezeichnet und mit 11 ein Mikrocontroller als elektronische Verarbeitungseinheit. Mit dem Bezugszeichen 25 ist ein Detektor für Brandkenngrössen bezeichnet. Ausgabeseitig gibt der Detektor 25 ein zu der zu detektierenden Brandkenngrösse korrelierendes elektrisches Messsignal FD aus. Dieses Signal FD wird zusammen mit dem elektrischen Messsignal DET des erfindungsgemässen Gassensors 1 erfasst und mittels eines Programms PRG, welches auf dem Mikrocontroller 11 ausgeführt wird, in Form eines Alarms oder Alarmpegels AL und als Gaskonzentrationswert CON zur möglichen Weiterverarbeitung ausgegeben.

### Bezugszeichenliste

- 1: Optoelektrischer Gassensor
- 2: Lichtquelle, LED
- 3: optoelektrischer Lichtempfänger, Photodiode, Phototransistor
- 4: weiterer optoelektrischer Lichtempfänger
- 5: transparenter Träger
- 6: oberflächenvergrössernde Strukturen, Lamellen, Prismen
- 6': Umlenkprisma, Umkehrprisma
- 7: Optodenmaterial
- 8: Spiegel, Spiegelflächen, Spiegelanordnung
- 9: Auswerteinheit
- 10: Schaltungsträger, Leiterplatte
- 11: Verarbeitungseinheit, Mikrocontroller
- 12: Gehäuse
- 20: Brandmelder
- 25: Detektor für Brandkenngrössen

- AL: Alarmmeldung, Alarmpegel
- CON: Gaskonzentrationswert
- FD: Brandkenngrössenmesswert
- PRG: Programm
- DET: elektrisches Messsignal
- DET2: weiteres elektrisches Messsignal
- DET': kompensiertes elektrisches Messsignal
- L1: optischer Pfad
- L2: paralleler optischer Pfad

## Patentansprüche

1. Optoelektrischer Gassensor (1) nach dem Durchlichtprinzip auf der Basis von Optoden, welcher zumindest eine Lichtquelle (2), einen optoelektrischen Empfänger (3) und einen transparenten Träger (5) für Optodenmaterial (7) aufweist, wobei der Träger (5) dergestalt ist sowie derart zur Lichtquelle (2) und zum optoelektrischen Empfänger (3) angeordnet ist, dass zumindest ein Teil des Lichts in den Träger (5) einkoppelbar, nach Verlauf entlang eines optischen Pfades (L1) wieder auskoppelbar und anschliessend durch den optoelektrischen Empfänger (3) zur Ausgabe eines mit einer vorliegenden Gaskonzentration korrelierenden elektrischen Messsignals (DET) detektierbar ist, **dadurch gekennzeichnet,**
**dass** der Träger (5) quer zum optischen Pfad (L1) verlaufende, oberflächenvergrössernde Strukturen (6) mit dem Optodenmaterial (7) aufweist.

2. Optoelektrischer Gassensor (1) nach Anspruch 1, wobei der transparente Träger (5) eine Vielzahl von Lamellen (6) als oberflächenvergrössernde Strukturen aufweist.

3. Optoelektrischer Gassensor (1) nach Anspruch 1 oder 2, wobei der transparente Träger (5) mit den oberflächenvergrössernde Strukturen (5) aus einem Kunststoff oder aus einem Glas, insbesondere mittels eines Spritzgussverfahrens hergestellt ist.

4. Optoelektrischer Gassensor (1) nach einem der vorherigen Ansprüche, wobei das Optodenmaterial (7) mittels eines Beschichtungs- oder Tauchverfahrens auf die oberflächenvergrössernden Strukturen (5) aufgebracht ist.

5. Optoelektrischer Gassensor (1) nach einem der vorherigen Ansprüche, wobei der transparente Träger (5) aus einem Kunststoff als Matrix mit eingebettetem Optodenmaterial (7) hergestellt ist.

6. Optoelektrischer Gassensor (1) nach einem der vorherigen Ansprüche, wobei das Optodenmaterial (7) eine oder mehrere, jeweils für ein Gas- oder Gasgemisch sensitive Indikatorsubstanzen mit voneinander verschiedenen Absorptionswellenlängenbereichen aufweist.

7. Optoelektrischer Gassensor (1) nach Anspruch 6, wobei die Lichtquelle (2) Licht zumindest in den Absorptionswellenlängenbereichen der jeweiligen Indikatorsubstanzen aussendet.

8. Optoelektrischer Gassensor (1) nach Anspruch 7, wobei die Lichtquelle (2) eine Leuchtdiode ist.

9. Optoelektrischer Gassensor (1) nach Anspruch 6 bis 8, wobei der optoelektrische Empfänger (3) sensitiv zumindest für Licht in den Absorptionswellenlängenbereichen der jeweiligen Indikatorsubstanzen ist.

10. Optoelektrischer Gassensor (1) nach Anspruch 9, wobei der optoelektrische Empfänger (3) ein Photosensor ist.

11. Optoelektrischer Gassensor (1) nach einem der vorherigen Ansprüche, mit einem weiteren optoelektrischen Empfänger (4) für Licht, welcher der Lichtquelle (2) gegenüberliegend und ausserhalb des optischen Pfades (L1) angeordnet ist, und mit einer Auswerteeinheit (9), welche zur Erfassung des elektrischen Messsignals (DET) vom optoelektrischen Empfänger (3) sowie eines weiteren elektrischen Messsignals (DET2) vom weiteren optoelektrischen Empfänger (4) vorgesehen ist, wobei die Auswerteeinheit (9) dazu eingerichtet ist, auf Basis des weiteren elektrischen Messsignals (DET2) ein helligkeitskompensiertes elektrisches Messsignal (DET') auszugeben.

12. Brandmelder zur Erfassung zumindest einer Brandkenngrösse, wobei im Brandmelder (20) ein optoelektrischer Gassensor (1) nach einem der vorherigen Ansprüche 1 bis 11 integriert ist.

13. Raumklimasensor zur Erfassung einer Raumtemperatur, einer Raumluftfeuchte, einer CO₂-Gaskonzentration und/oder von flüchtigen organischen Verbindungen, wobei im Raumklimasensor ein optoelektrischer Gassensor (1) nach einem der vorherigen Ansprüche 1 bis 11 integriert ist.

14. Gefahrenmelder, insbesondere CO-Gefahrenmelder, zur Erfassung lebensgefährlicher Gaskonzentrationswerte in der Umgebungsluft, wobei im Gefahrenmelder ein optoelektrischer Gassensor (1) nach einem der vorherigen Ansprüche 1 bis 11 integriert ist.

15. Verwendung eines optoelektrischen Gassensors (1) nach einem der vorherigen Ansprüche 1 bis 11 in einem Brandmelder (20), in einem Raumklimasensor oder in einem Gefahrenmelder.
